# EUROPEAN PATENT SPECIFICATION

(11) **EP 1 241 899 B1**
(45) Date of publication and mention of the grant of the patent: **29.07.2009**
(21) Application number: 01106010.0
(22) Date of filing: 12.03.2001
(51) Int. Cl.: H04Q 3/66

(54) **Method for preventing circular routing in a switched telephone network**
Verfahren zum Verhindern von Leitweglenkungsschleifen in einem geschalteten Telephonnetz
Procédé permettant d'empêcher un acheminement circulaire dans un réseau téléphonique commuté

(43) Date of publication of application: 18.09.2002
(73) Proprietor: TELEFONAKTIEBOLAGET LM ERICSSON (publ), 164 83 Stockholm (SE)
(72) Inventor: Petersen, Tommy Moller, 2620 Albertslund (DK); Petersen, Rene, 3032 Victoria (AU)
(74) Representative: Tonscheidt, Andreas

(56) References cited:
- WO-A-00/42785
- US-A- 5 537 392

## Description

### TECHNICAL FIELD

The present invention relates to a method for preventing circular routing in a switched telephone network comprising several nodes, as stated in the preamble of claim 1.

### BACKGROUND ART

In methods of this kind, it is known to minimize the risk of circular routing of calls by using different types of adaptive routing, based on forward indicators, e.g. as disclosed in WO 00/42785. However, such a method requires the presence of specific signalling information, which is not always available, especially not in a scenario of routing involving several operators. Typically such individual operators protect their routing plans and do not supply any information on the party originating a call to be routed via networks of other operators. Furthermore, ISUP 97(ISUP 4.5) uses a hop counter to prevent circular routing in networks. Again this concept requires signalling support, which is not always available, especially in a scenario as described above.

### DISCLOSURE OF THE INVENTION

It is the object of the present invention to provide a method for preventing circular routing in a switched telephone network comprising several nodes, of the kind referred to above, with which it is possible to prevent circular routing in a network in which minimal information on the calls to be routed is available, and this object is achieved by a method of said kind, which according to the invention also comprises the features set forth in the characterising part of claim 1. This object is equally achieved by a work according to claim 7. With this arrangement, a selected call-associated parameter is detected and a list of such parameter values is maintained, and each parameter value is associated with a counter, indicating the number of times the parameter value occurs in said node. The checking of each counter against a criterion leads to the performing of actions preventing the circular routing. By properly selecting the parameter(s) to detect, criterion(ria) to be applied and consequent action(s) to be performed, the prevention of circular routing can ensure the best call processing in the network for the operators.

Preferred parameters, criteria and actions are revealed in the subordinate claims 2-5, and a further surveillance providing a more secure detection of circular routing is revealed in claim 6, and claim 7 reveals a more streamlined method, in which only selected incoming lines are subject to surveillance, said lines being selected in accordance with suspected higher possibility of circular routing.

### BRIEF DESCRIPTION OF THE DRAWINGS

In the following detailed part of the present description, the invention will be explained in more detail with reference to the exemplary embodiment of a method in accordance with the present invention, shown in the drawings, in which
Fig. 1 shows a schematic diagram of the processing of calls in a node for routing calls in a switched telephone network comprising several nodes,
Fig. 2-6 schematically shows a flow chart of the processing of a call in accordance with a preferred embodiment of the present invention,
Fig. 7 shows the course of development of a counter value in different situations.

### DESCRIPTION OF THE PREFERRED EMBODIMENT

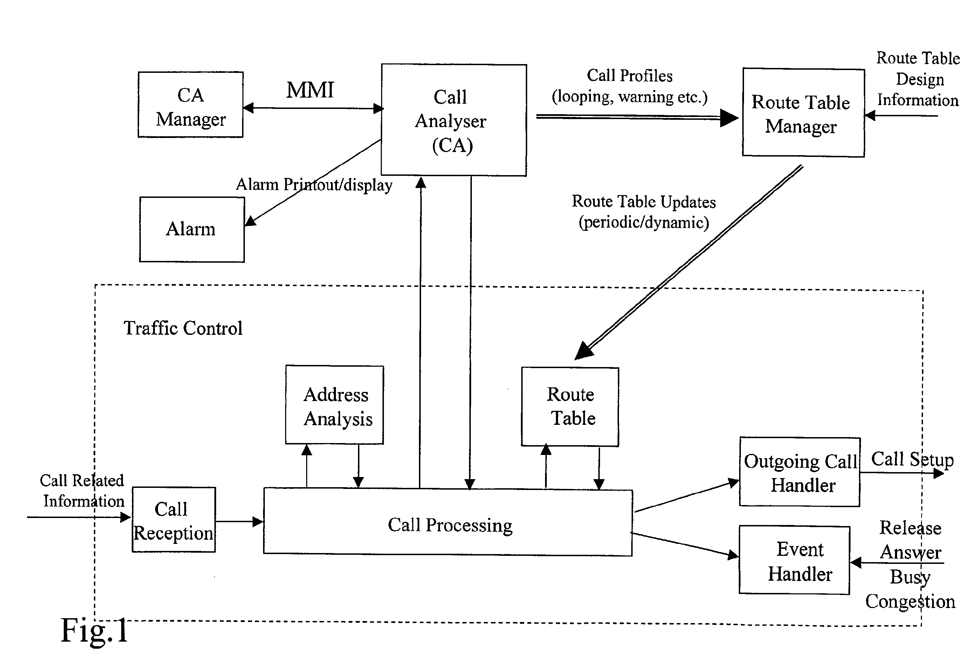

The schematic bloc diagram of the processing of calls in a node shown in Fig. 1 comprises the traditional traffic control system, in which call related information is received by a call reception module and transferred to a call processing module which by means of address analysis and a route table performs the call processing for transferring the call to the outgoing call handler which transfers call set-up messages to the next node in the telephone network. Furthermore, this traffic control system comprises an event handler receiving messages from the downstream nodes in the network, such as release, answer, busy, congestion, etc., indicating the progress of the call set-up downstream in the network. In order to implement the present invention, the call processing module is connected to a call analyser which performs analyses in order to check the calls and keep a list of calls in the active phase of call set-up, i.e. from call reception to either call connection or release, busy, congestion, etc. In the call analyser, a counter is associated with each element in the list and this counter is checked against the selected criteria, such as selected thresholds.

A call analyser manager is provided for setting up the call analyser with data, such as threshold values and actions. Furthermore, the call analyser is connected to an alarm module used for informing the operator that some calls are suspected or detected to be circular routed. This information may directly or indirectly be used by the route table manager system for updating the route table, this updating usually being performed periodically, but with the present system giving a possibility of making a dynamic updating of the route table. In this situation, it may be necessary to transfer information directly from the call analyser module to the route table manager module, which updates the route table.

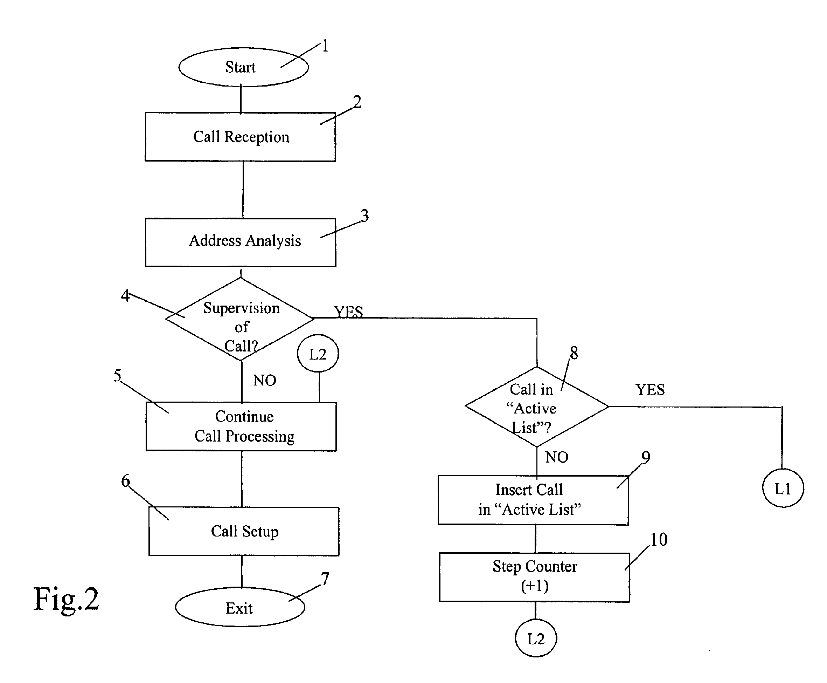

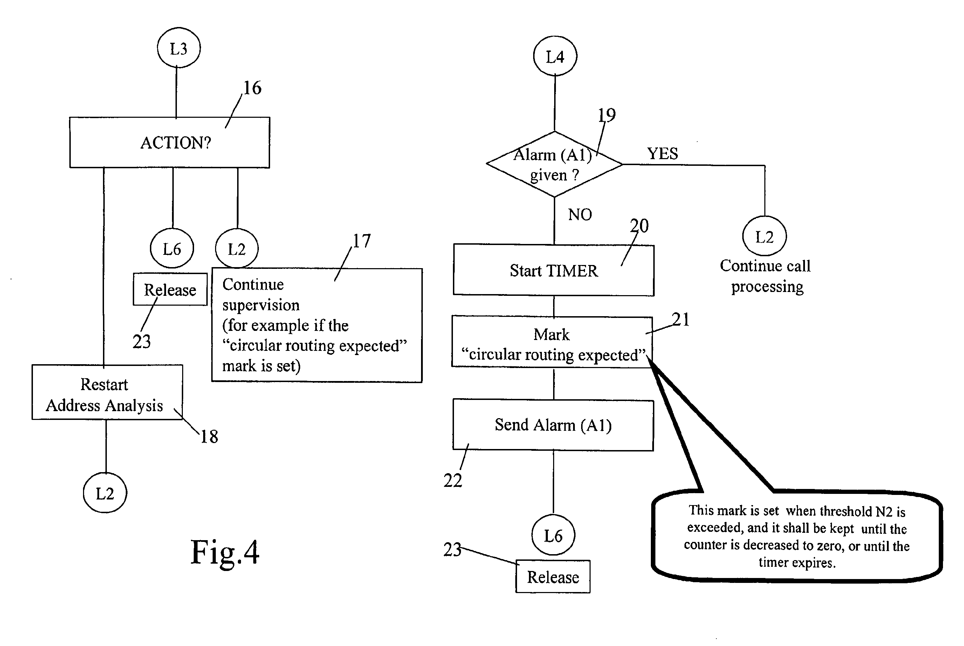

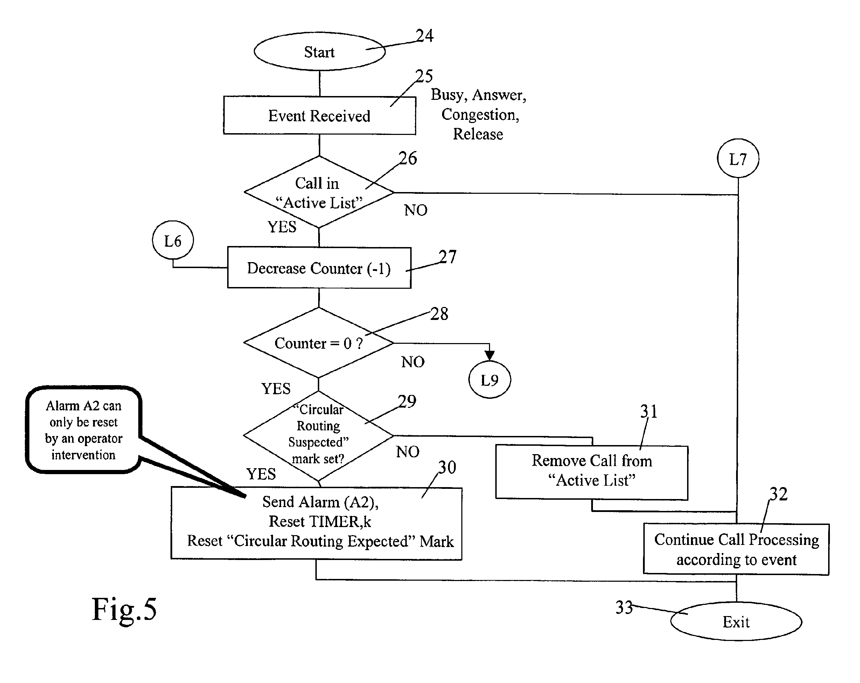

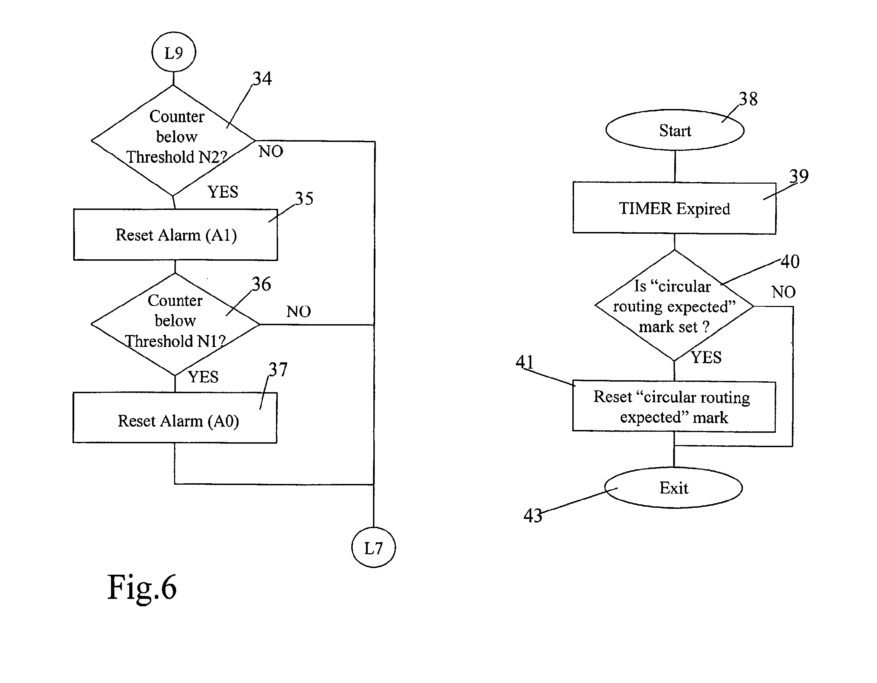

The preferred method shown in the flow chart in Fig. 2-6 functions in the following way:

When a call is received, the processing is started at 1, and the call reception is performed at 2 and an address analysis is performed at 3. At 4 it is decided whether the call is to be supervised or not, said decision e.g. being dependent on route origin and/or other parameters of the call. If the call is not to be supervised, the call processing is continued at 5, and the call set-up is performed at 6 and the processing is finished exiting at 7. If the call is to be supervised, it is checked if the call is already in the active list at 8. If this is not the case at 9, the call is inserted in the active list and the corresponding step counter is increased by one at 10, whereafter the processing is continued at 5 etc., as described above. If the call is already in the active list, the step counter is increased by one at 11 and at 12 it is checked whether the first threshold N1 is exceeded. If this is not the case, the call processing is continued at 5 etc., as described above. If the threshold N1 is exceeded, at 13 it is checked whether an alarm A0 is already given. If this is the case, the processing is continued at 15, and if it is not the case, the alarm is sent at 14, and in both cases processing is continued at 15. At 15 it is checked whether the second threshold N2 is exceeded. If this is not the case, at 16 it is decided what actions are to be performed, depending on different set parameters, one possibility being to continue the supervision of the call parameter at 17 and continue call processing at 5 etc., as described above. Another possibility is to restart address analysis at 18 and continue call processing at 5 etc., as described above. A third possibility is to perform a release of the call at 23 and continue the processing at 27, as described in the following. If the threshold N2 is exceeded, it is checked at 19 whether the alarm A1 is already given. If this is the case, the call processing is continued at 5, as described above, if not, a timer is started at 20 and a marking is set at 21, said marking indicating that circular routing is expected. This mark is kept until the counter is decreased to 0 or until the timer started under 20 expires. At 22 an alarm A1 is sent. After this, the call is released at 23 and the processing is continued at 27, as described in the following.

When the event handler receives a release, busy, answer, congestion, etc., the processing thereof is started at 24 and the event handler is receiving the event at 25, whereafter at 26 it is checked whether the call is in the active list. If this is not the case, the call processing is continued in accordance with the event at 32 and the processing is finished at the exit 33. If the call is in the active list at 27 the counter is decreased by 1 and at 28 it is checked whether the counter is equal to 0. If this is the case, it is checked at 29 whether circular routing suspected mark is set. If this is not the case, the call is removed from the active list at 31 and the call processing is continued at 32, as described above. If the circular routing suspected mark is set, as checked at 29, an alarm A2 is sent and the timer is reset and the circular routing expected mark is reset. The alarm A2 can only be reset by an operator intervention. After this, the processing is finished at the exit 33.

If at 28, the counter is not equal to 0, at 34 it is checked whether the counter is below threshold N2. If this is not the case, the call processing is continued in accordance with the event at 32 etc., as described above. If the counter is below threshold N2, the alarm A1 is reset at 35, and at 36 it is checked whether the counter is below threshold N1. If this is not the case, the call processing is continued in accordance with the event at 32 etc., as described above. If the counter is below threshold N1, the alarm A0 is reset at 37 and the call processing is continued at 32 in accordance with the event, as described above.

A separate process checks the timer, starting at 38 when the timer has expired 39. At 40 it is checked whether circular routing expected mark is set. If this is the case, at 41 the circular routing expected mark is reset and the process is finished at the exit 43. If the circular routing expected mark is not set at 40, the process is finished at the exit 43.

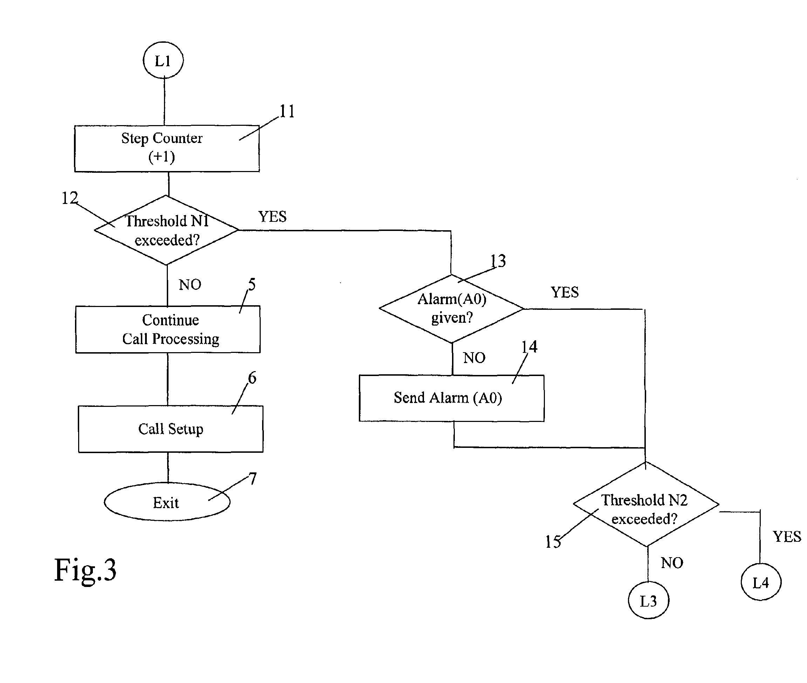

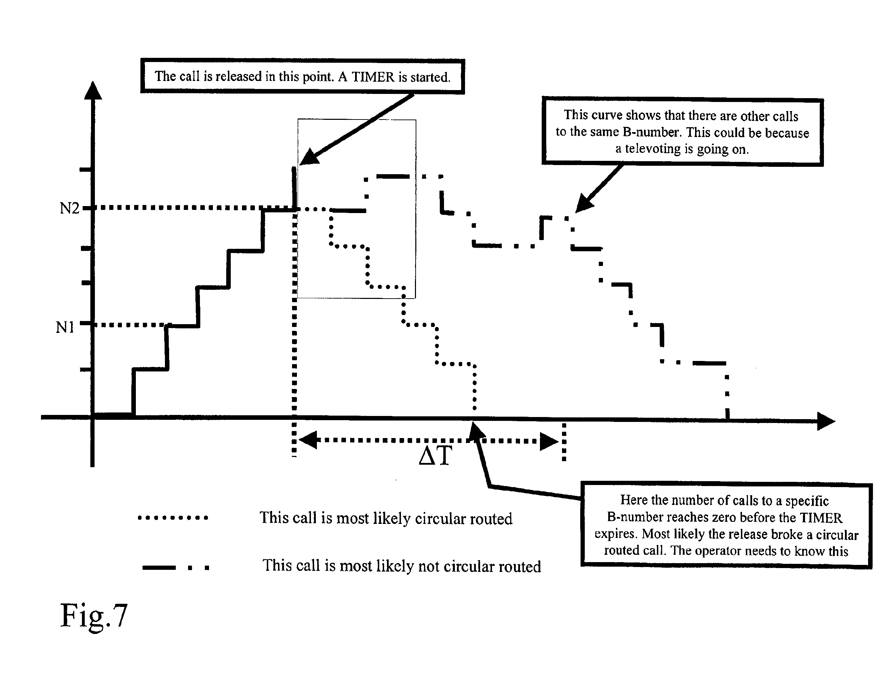

The function of the method described above in connection with Fig. 2-6 is now explained in connection with Fig. 7, showing the development of the counter associated with a parameter value in the active list. As shown in Fig. 3, the counter value increases steadily from 0 passing N1 and reaching N2, at which point of time the call is released and a timer is started. The timer is running for a time indicated as ΔT. In a first case, the release of the call when reaching N2 results in a stable decrease in the count value reaching 0 before the timer has expired. In this case most likely the release broke a circular routed call and the operator receives an alarm indicating this, this information being usable for updating the route tables in order to route calls corresponding to this circular routed call in an alternative way in the future. In the other sketched situation, the timer expires before the counter reaching 0, which indicates that there are other calls with the same parameter value. This could be because a televoting is going on or due to the fact that the B-number is actually a PABX, receiving several different calls from different A-numbers.

Although the invention above has been described in connection with a preferred embodiment, in which the parameter selected for surveillance is the called number (B-number) and the criteria selected are fixed thresholds N1 and N2 etc., it will be evident for a man skilled in the art that other parameters may be selected, when present in the received calls, said parameters e.g. comprising the calling number (A-number), in which case the combination of called number and calling number would normally identify a single call, and accordingly if this single call is occurring just two times, a circular routing is detected. Furthermore, the criteria might be more sophisticated than the simple thresholds N1 and N2, e.g. a detection of a constant increase of counter value per unit of time, indicating that one single call is routed through the node several times. Furthermore, it would be possible, instead of the timer, to use a corresponding substantially constant decrease of counter value per unit of time over a certain numbers of decrements for indicating that the release of the call actually broke a circular routed call.

## Claims

1. Method for preventing circular routing in a switched telephone network comprising several nodes,
**characterised by** comprising the steps of
a) in at least one node establishing a detection of a selected call-associated parameter, said parameter having substantially identical parameter value for each occurrence in said node of a circular routed call,
b) establishing a list of parameter values for calls in the active phase of call set-up,
c) associating with each parameter value in said list a counter indicating the number of times said parameter value occurs,
d) checking the course of development of the counters against at least one criterion, and
e) performing actions in dependence of the fulfillment of each criterion, whereby the action is selected from a group comprising
- release of the call leading to the fulfillment of the relevant criterion,
- re-routing of the call leading to the fulfillment of the relevant criterion, and
- reporting the possible occurrence of circular routing to the operator or other appropriate system for use for updating the routing tables.

2. Method in accordance with claim 1, **characterised by** the parameters selected for surveillance being selected from the following:
X) called number (B-number)
Y) calling number (A-number)
Z) other call identifying parameters,

3. Method in accordance with any of the preceding claims, **characterised by** the criterion under d) being selected from the following:
i) a maximum value of counter exceeded,
ii) a substantially constant increase of counter value pr. unit of time, over a certain number of increments, and
iii) other criteria appropriately indicating the occurrence of circular routed calls.

4. Method in accordance with any of the preceding claims, **characterised by** the use of several criteria and performing different actions, depending on which criterion is fulfilled.

5. Method in accordance with any of the preceding claims, **characterised by** further comprising a surveillance of the result of the release of a call, said surveillance comprising the setting of a timer, when the release is performed and checking the counter for decreasing to zero before the timer expires, thereby providing a secure indication that the release resolved the circular routing of a single call.

6. Method in accordance with any of the preceding claims, **characterised by** the surveillance only being established for selected incoming lines, said lines being selected in accordance with suspicion of higher possibility for circular routing.

7. Node being adapted to prevent circular routing in a switched telephone network, comprising
- means for establishing a detection of a selected call-associated parameter, said parameter having substantially identical parameter value for each occurrence in said node of a circular routed call,
- means for establishing a list of parameter values for calls in the active phase of call set-up,
- means for associating with each parameter value in said list a counter indicating the number of times said parameter value occurs,
- means for checking the course of development of the counters against at least one criterion, and
- means adapted for performing actions in dependence of the fulfillment of each criterion, whereby the action is selected from a group comprising
- release of the call leading to the fulfillment of the relevant criterion,
- re-routing of the call leading to the fulfillment of the relevant criterion, and
- reporting the possible occurrence of circular routing to the operator or other appropriate system for use for updating the routing tables,

8. Node according to claim 7, **characterised in that**, the parameters selected for surveillance being selected from the following:
- called number (B-number)
- calling number (A-number)
- other call identifying parameters.

9. Node according to claim 7 or 8, **characterised in that**, the criterion is selected from the following:
- a maximum value of counter exceeded,
- a substantially constant increase of counter value pr. unit of time, over a certain number of increments, and
- other criteria appropriately indicating the occurrence of circular routed calls.

10. Node according to any of the preceding claims 7 to 9, **characterised in that**, the node further comprises means for keeping under surveillance the result of the release of a call, said means for keeping under surveillance being adapted to set a timer, when the release is performer and said means for keeping under surveillance being adapted to check the counter for decreasing to zero before the timer expires, thereby providing a secure indication that the release resolved the circular routing of a single call.

## Patentansprüche

1. Verfahren zur Verhinderung von wiederkehrender Leitung in einem Fernsprechwählnetz, das mehrere Knoten aufweist, **dadurch gekennzeichnet, dass** es die folgenden Schritte aufweist:
a) Festlegen in wenigstens einem Knoten einer Erkennung eines ausgewählten rufgebundenen Parameters, wobei der Parameter einen im Wesentlichen identischen Parameterwert für jedes Auftreten eines wiederkehrend geleiteten Rufs in dem Knoten aufweist,
b) Erstellen einer Liste von Parameterwerten für Rufe in der aktiven Phase des Rufaufbaus,
c) Assoziieren eines Zählers, der die Anzahl von Malen anzeigt, die der Parameterwert auftritt, mit jedem Parameterwert in der Liste,
d) Vergleichen des Entwicklungsverlaufs der Zähler mit wenigstens einem Kriterium,
e) Durchführen von Maßnahmen in Abhängigkeit von der Erfüllung jedes Kriteriums, wobei die Maßnahme ausgewählt wird aus einer Gruppe, welche aufweist:
- Freigeben des Rufs, der zur Erfüllung des relevanten Kriteriums führt,
- Umleiten des Rufs, der zur Erfüllung des relevanten Kriteriums führt, und
- Melden des möglichen Auftretens einer wiederkehrender Leitung an den Betreiber oder ein anderes geeignetes System zur Verwendung zum Aktualisieren der Leittabellen.

2. Verfahren nach Anspruch 1, **dadurch gekennzeichnet, dass** die Parameter, die zur Überwachung ausgewählt werden, aus den folgenden ausgewählt werden:
X) einer anzurufenden Rufnummer (B-Nummer)
Y) einer anrufenden Rufnummer (A-Nummer)
Z) anderen Rufidentifikationsparametern.

3. Verfahren nach einem der vorhergehenden Ansprüche, **dadurch gekennzeichnet, dass** das Kriterium unter d) aus den folgenden ausgewählt wird:
i) einem überschrittenen maximalen Zählerwert,
ii) einem im Wesentlichen konstanten Zählerwertanstieg je Zeiteinheit über eine bestimmte Anzahl von Inkrementen und
iii) anderen Kriterien, die das Auftreten von wiederkehrend geleiteter Rufe in geeigneter Weise anzeigen.

4. Verfahren nach einem der vorhergehenden Ansprüche, **gekennzeichnet durch** die Verwendung von mehreren Kriterien und das Durchführen von verschiedenen Maßnahmen in Abhängigkeit davon, welches Kriterium erfüllt wird.

5. Verfahren nach einem der vorhergehenden Ansprüche, **dadurch gekennzeichnet, dass** es ferner eine Überwachung des Ergebnisses der Freigabe eines Rufs aufweist, wobei die Überwachung das Einstellen eines Zeitgebers, wenn die Freigabe durchgeführt wird, und das Überprüfen des Zählers auf einen Rückgang auf null vor dem Ablauf des Zeitgebers aufweist, um **dadurch** einen sicherer Hinweis darauf zu geben, dass die Freigabe die wiederkehrender Leitung eines einzelnen Rufs löste.

6. Verfahren nach einem der vorhergehenden Ansprüche, **dadurch gekennzeichnet, dass** die Überwachung nur für ausgewählte Eingangsleitungen engesetzt wird, wobei die Leitungen gemäß dem Verdacht einer größeren Möglichkeit für wiederkehrende Leitung ausgewählt werden.

7. Knoten, der zum Verhindern von wiederkehrender Leitung in einem Fernsprechwählnetz ausgelegt ist, aufweisend:
- Mittel zum Festlegen einer Erkennung eines ausgewählten rufgebundenen Parameters, wobei der Parameter einen im Wesentlichen identischen Parameterwert für jedes Auftreten eines wiederkehrend geleiteten Rufs in dem Knoten aufweist,
- Mittel zum Erstellen einer Liste von Parameterwerten für Rufe in der aktiven Phase des Rufaufbaus,
- Mittel zum Assoziieren eines Zählers, der die Anzahl von Malen anzeigt, die der Parameterwert auftritt, mit jedem Parameterwert in der Liste,
- Mittel zum Vergleichen des Entwicklungsverlaufs der Zähler mit wenigstens einem Kriterium,
- Mittel, die zum Durchführen von Maßnahmen in Abhängigkeit von der Erfüllung jedes Kriteriums ausgelegt sind, wobei die Maßnahme ausgewählt ist aus einer Gruppe, welche aufweist:
- Freigeben des Rufs, der zur Erfüllung des relevanten Kriteriums führt,
- Umleiten des Rufs, der zur Erfüllung des relevanten Kriteriums führt, und
- Melden des möglichen Auftretens einer wiederkehrender Leitung an den Betreiber oder ein anderes geeignetes System zur Verwendung zum Aktualisieren der Leittabellen.

8. Knoten nach Anspruch 7, **dadurch gekennzeichnet, dass** die Parameter, die zur Überwachung ausgewählt sind, aus den folgenden ausgewählt sind:
- einer anzurufende Rufnummer (B-Nummer)
- einer anrufende Rufnummer (A-Nummer)
- anderen Rufidentifikationsparametern.

9. Knoten nach Anspruch 7 oder 8, **dadurch gekennzeichnet, dass** das Kriterium aus den folgenden ausgewählt ist:
- einem überschrittenen maximalen Zählerwert,
- einem im Wesentlichen konstanten Zählerwertanstieg je Zeiteinheit über eine bestimmte Anzahl von Inkrementen und
- anderen Kriterien, die das Auftreten von wiederkehrender geleiteter Rufe in geeigneter Weise anzeigen.

10. Knoten nach einem der vorhergehenden Ansprüche 7 bis 9, **dadurch gekennzeichnet, dass** der Knoten ferner Mittel zum Überwachen des Ergebnisses der Freigabe eines Rufs aufweist, wobei die Mittel zum Überwachen so ausgelegt sind, dass sie einen Zeitgeber einstellen, wenn die Freigabe durchgeführt wird, und die Mittel zum Überwachen so ausgelegt sind, dass sie den Zähler auf einen Rückgang vor dem Ablauf des Zeitgebers überprüfen, um dadurch einen sicheren Hinweis darauf zu geben, dass die Freigabe die wiederkehrende Leitung eines einzelnen Rufs löste.

## Revendications

1. Procédé pour empêcher un routage circulaire dans un réseau téléphonique commuté comprenant plusieurs noeuds,
**caractérisé en ce qu'**il comprend les étapes suivant:
a) dans au moins un noeud, établir une détection d'un paramètre associé à un appel sélectionné, ledit paramètre ayant substantiellement une valeur de paramètre identique pour chaque occurrence dans ledit noeud d'un appel routé de manière circulaire,
b) établir une liste de valeurs de paramètres pour des appels dans la phase active d'établissement d'appel,
c) associer à chaque valeur de paramètre dans ladite liste un compteur indiquant le nombre de fois que ladite valeur de paramètre apparaît,
d) vérifier le cours de développement des compteurs par rapport à au moins un critère, et
e) exécuter des actions en fonction de la satisfaction de chaque critère, moyennant quoi l'action est sélectionnée dans un groupe comprenant :
- la libération de l'appel entraînant la satisfaction du critère significatif,
- le re-routage de l'appel entraînant la satisfaction du critère significatif, et
- le rapport de l'occurrence éventuelle d'un routage circulaire à l'opérateur ou à un autre système approprié à utiliser pour mettre à jour les tables de routage.

2. Procédé selon la revendication 1, **caractérisé en ce que** les paramètres sélectionnés pour la surveillance sont sélectionnés parmi ce qui suit :
X) numéro appelé (numéro B)
Y) numéro appelant (numéro A)
Z) d'autres paramètres d'identification d'appel.

3. Procédé selon une quelconque des revendications précédentes, **caractérisé en ce que** le critère d) est sélectionné parmi ce qui suit :
i) une valeur maximale de compteur dépassée,
ii) une augmentation substantiellement constante d'une valeur de compteur par unité de temps, sur un certain nombre d'incréments, et
iii) d'autres critères indiquant de manière appropriée l'occurrence d'appels routés de manière circulaire.

4. Procédé selon une quelconque des revendications précédentes, **caractérisé par** l'utilisation de plusieurs critères et l'exécution de différentes actions, en fonction du critère qui est satisfait.

5. Procédé selon une quelconque des revendications précédentes, **caractérisé en ce qu'**il comprend en outre une surveillance du résultat de la libération d'un appel, ladite surveillance comprenant le réglage d'un temporisateur, quand la libération est effectuée et une vérification du compteur pour baisser à zéro avant que le temporisateur arrive à expiration, en fournissant ainsi une indication sécurisée que la libération a résolu le routage circulaire d'un appel individuel.

6. Procédé selon une quelconque des revendications précédentes, **caractérisé en ce que** la surveillance est seulement établie pour les lignes entrantes sélectionnées, lesdites lignes étant sélectionnées conformément à une suspicion d'une possibilité plus grande d'un routage circulaire.

7. Noeud étant adapté afin d'empêcher un routage circulaire dans un réseau téléphonique commuté, comprenant :
- des moyens pour établir une détection d'un paramètre associé à un appel sélectionné, ledit paramètre étant une valeur de paramètre substantiellement identique pour chaque occurrence dans ledit noeud d'un appel routé de manière circulaire,
- des moyens pour établir une liste de valeurs de paramètres pour des appels dans la phase active de l'établissement d'appel,
- des moyens pour associer à chaque valeur de paramètre dans ladite liste un compteur indiquant le nombre de fois que ladite valeur de paramètre apparaît,
- des moyens pour vérifier le cours de développement des compteurs par rapport à au moins un critère, et
- des moyens adaptés pour exécuter des actions en fonction de la satisfaction de chaque critère, moyennant quoi l'action est sélectionnée dans un groupe comprenant :
- la libération de l'appel entraînant la satisfaction du critère significatif,
- le re-routage de l'appel entraînant la satisfaction du critère significatif, et
- le rapport de l'occurrence éventuelle d'un routage circulaire à l'opérateur ou à un autre système approprié à utiliser pour mettre à jour les tables de routage.

8. Noeud selon la revendication 7, **caractérisé en ce que** les paramètres sélectionnés pour la surveillance sont sélectionnés parmi ce qui suit :
- numéro appelé (numéro B)
- numéro appelant (numéro A)
- d'autres paramètres d'identification d'appel.

9. Noeud selon la revendication 7 ou 8, **caractérisé en ce que** le critère est sélectionné parmi ce qui suit :
- une valeur maximale de compteur dépassée,
- une augmentation substantiellement constante de la valeur de compteur par unité de temps, sur un certain nombre d'incréments, et
- d'autres critères indiquant de manière appropriée l'occurrence d'appels routés de manière circulaire.

10. Noeud selon une quelconque des revendications précédentes 7 à 9, **caractérisé en ce que** le noeud comprend en outre des moyens pour garder sous surveillance le résultat de la libération d'un appel, lesdits moyens pour garder sous surveillance étant adaptés afin de régler un temporisateur, quand la libération est effectuée et lesdits moyens pour garder sous surveillance étant adaptés afin de vérifier le compteur pour baisser à zéro avant que le temporisateur arrive à expiration, en fournissant ainsi une indication sécurisée que la libération a résolu le routage circulaire d'un appel circulaire.
